# EUROPÄISCHE PATENTSCHRIFT

(11) **EP 1 643 209 B1**
(45) Veröffentlichungstag und Bekanntmachung des Hinweises auf die Patenterteilung: **04.11.2020**
(21) Anmeldenummer: 05108486.1
(22) Anmeldetag: 15.09.2005
(51) Int. Cl.: G01B 11/06, G01B 11/00, G01B 11/25, C23C 2/14, C23C 4/00, C23C 4/12

(54) **Messverfahren zum Messen einer Dicke einer Beschichtung**
Method for measuring a coating thickness
Procédé de mesure de l'épaisseur d'une couche

(30) Priorität: 30.09.2004 CH 15952004
(43) Veröffentlichungstag der Anmeldung: 05.04.2006
(73) Patentinhaber: Ansaldo Energia IP UK Limited, London W1G 9DQ (GB)
(72) Erfinder: Dratwinski, Marian, 4332 Stein (CH); Emminger, Hermann, 5000 Aarau (CH); Lang, Hanspeter, 5212 Hausen (CH); Wassmer, Klaus-Dieter, 79733 Görwihl (DE)
(74) Vertreter: Bernotti, Andrea

(56) Entgegenhaltungen:
- EP-A1- 1 016 862
- EP-A2- 0 228 765
- DE-A1- 3 320 160
- DE-A1- 4 425 187
- US-A- 5 757 498
- US-A- 6 120 833

## Beschreibung

### Technisches Gebiet

Die Erfindung betrifft ein Messverfahren zum Messen einer Dicke einer Beschichtung eines Bauteils, insbesondere einer hitzeverträglichen Beschichtung, auf einer Komponente einer Gasturbine.

### Stand der Technik

Strömungsmaschinen, insbesondere Gasturbinen, sind im Betrieb oftmals hohen Temperaturen ausgesetzt und werden deshalb mit hitzeverträglichen, oft keramischen Beschichtungen versehen. Diese Beschichtungen werden beispielsweise mit Plasma-Bogen-Sprüh-Pistolen auf die metallischen Komponenten in mehreren Schichten aufgetragen, indem pro Schicht mehrere Bahnen des Schichtmaterials nebeneinander oder auch überlappend auf die Oberfläche gesprüht werden, bis die Oberfläche bedeckt ist. Die Schichtdicke kann während der Prozessentwicklung beispielsweise durch Schliffbilder gemessen werden.

Streuungen während des Beschichtungsprozesses in der Fertigung können für metallische Beschichtungen nicht und für keramische Beschichtungen nur eingeschränkt mit kapazitiven Messmethoden erkannt werden.

Neben einer exakten Ermittlung der Schichtdicke ist es insbesondere für eine Offline-Programmierung der Sprühvorrichtung notwendig, eine exakte Kontur und Massen-Intensitäts-Verteilung des von der Sprühvorrichtung ausgesandten Plasma-Schichtmaterial-Strahls zu kennen. Ohne deren exakte Kenntnis ist die Offline-Programmierung ungenau und die Schichtdicken insbesondere an kritischen Stellen, wie Kanten und Radien, müssen in mehreren Iterationen durch aufwändige und kostenintensive Schliffbilder verifiziert werden.

Bezüglich des Standes der Technik sind Schichtdickenmessungen und Kompensation der Wärmeausdehnung in DE 4425187 A1 und EP 0228765 A2 offenbart. Schichtdickenmessungen sind auch in DE 3320160 A1, US 6120833 A und US 5757498 A offenbart.

### Darstellung der Erfindung

Hier will die Erfindung Abhilfe schaffen. Die Erfindung, wie sie in den Ansprüchen gekennzeichnet ist, beschäftigt sich mit dem Problem, ein verbessertes Messverfahren zur Ermittlung einer Schichtdicke sowie insbesondere zur Ermittlung einer Massen-Intensitäts-Verteilung einer Sprühvorrichtung anzugeben, wodurch insbesondere die Qualität der hergestellten Beschichtung verbessert werden kann.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Messverfahren zum Messen einer Dicke einer Beschichtung eines Bauteils, insbesondere einer hitzeverträglichen Beschichtung auf einer Komponente einer Gasturbine, Koordinaten des Bauteils mit einer Messeinrichtung, insbesondere mit einem optischen Scanner, vor und nach der Beschichtung dreidimensional zu vermessen. Gleichzeitig wird während der Beschichtung ein thermischer Verzug des Bauteils erfasst. Die Dicke der Beschichtung wird anschließend aus einem Vergleich der gemessenen Bauteilkoordinaten vor und nach der Beschichtung ermittelt, wobei der durch die Beschichtung eingetretene thermische Verzug des Bauteils durch einen Vergleich mit wenigstens einem Referenzpunkt an einer unbeschichteten Stelle bei der Dickenermittlung der Beschichtung berücksichtigt wird.

Durch das erfindungsgemäße Messverfahren kann die Dicke der aufgebrachten Beschichtung zuverlässig ermittelt werden, ohne dass störende Einflüsse, wie beispielsweise ein thermischer Verzug des Bauteils, das Messergebnis verfälschen würden. Der thermische Verzug, welcher aufgrund des Hitzeeintrags während dem Beschichten auftreten kann, wird beim erfindungsgemäßen Verfahren dadurch kompensiert, dass ein Vergleich mit wenigstens einem Referenzpunkt an einer unbeschichteten Stelle durchgeführt und in die Berechung einbezogen wird. Bei einer Messeinrichtung mit einem optischen Taster kann die Messung derart beschleunigt werden, dass eine 100%-Kontrolle der aufgetragenen Beschichtung ermöglicht wird und dadurch eine besonders hohe Qualitätssicherung erzielt werden kann.

Gemäß der erfindungsgemäßen Lösung wird das Verfahren zur Ermittlung einer Massen-Intensitäts-Verteilung einer Beschichtungsvorrichtung verwendet. Hierbei wird ein plattenförmiges Bauteil ohne Relativbewegung zur Beschichtungsvorrichtung eine vorher definierte Zeit beschichtet und vor und nach der Beschichtung mit einer Messeinrichtung, insbesondere einem optischen Scanner, dreidimensional vermessen. Der thermische Verzug des Bauteils wird dabei analog dem Messverfahren zum Messen der Dicke der Beschichtung während der Beschichtung erfasst und durch Vermessen einer unbeschichteten Rückseite des Bauteils berücksichtigt. Generell kann hierbei das Vermessen sowohl manuell mit einem Messtaster als auch automatisch mit einer 3D-Messeinrichtung, beispielsweise einem dreidimensionalen Digitalisier-Scanner, erfolgen. Das so entstandene Massen-Intensitäts-Profil des Spritzflecks kann als Input für die Offline-Programmierung der Beschichtungsvorrichtung verwendet werden. Als Beschichtungsvorrichtung kommt beispielsweise eine Plasma-Bogen-Sprüh-Pistole in Frage. Durch das erfindungsgemäße Verfahren, insbesondere mittels eines optischen Scanners, kann die Ermittlung des Massen-Dichte-Profils erheblich beschleunigt und präzisiert werden.

Gemäß einer weiteren vorteilhaften Ausführungsform der erfindungsgemäßen Lösung wird die Massen-Intensitäts-Verteilung aus der Dickenverteilung ermittelt. Die Beschichtungen werden, wie oben erwähnt, mit Beschichtungsvorrichtungen, beispielsweise Plasma-Bogen-Sprüh-Pistolen, auf die metallischen Komponenten des Bauteils in mehreren Schichten aufgetragen, indem pro Schicht mehrere Bahnen des Schichtmaterials nebeneinander oder auch überlappend auf die Oberfläche gesprüht werden, bis diese bedeckt ist. Findet während des Beschichtungsvorgangs keine Relativbewegung zwischen dem zu beschichtenden Bauteil und der Beschichtungsvorrichtung statt, so kann aus den jeweiligen örtlichen Schichtdicken die Massen-Intensitäts-Verteilung der Beschichtungsvorrichtung ermittelt werden.

Zweckmäßig wird die Beschichtung im Plasma-Bogen-Sprühverfahren aufgebracht. Führt man einem Stück Materie kontinuierlich Energie zu, so erhöht sich seine Temperatur und es geht in der Regel über den flüssigen in den gasförmigen Zustand über. Setzt man die Energiezufuhr fort, so wächst die Bewegungsenergie der elementaren Bausteine mit der Temperatur an, bis zu einem Punkt, wo bei den Zusammenstößen der Gasmoleküle und Atome die aus Elektronen bestehende Atomhülle aufgebrochen wird, so dass negativ geladene Elektronen und positiv geladene Ionen entstehen. Dieses Gemisch bezeichnet man als Plasma, das aufgrund seiner hohen Temperatur elektrische Leitfähigkeit besitzt und sich dadurch durch äußere elektrische und magnetische Felder leicht beeinflussen lässt. Je nach verwendetem Plasmagas und zugeführter Energie werden im Plasmastrahl Temperaturen von bis zu 50.000 K erreicht. Aufgrund des hohen Energieinhaltes ermöglichen derartige Plasma-Verfahren Prozesse, die in anderen Materialzuständen nicht ablaufen können. Plasma-Bogen-Sprühverfahren zeichnen sich zudem durch eine hohe Flexibilität und Vielfalt verarbeitbarer Materialien, wie z. B. Metalle oder Keramiken, aus und haben im Vergleich zu Aufdampfverfahren wesentlich höhere Auftragsraten. Wichtig ist außerdem, dass plasmagesprühte Beschichtungen sowohl hinsichtlich der Zusammensetzung als auch der Prorosität kontrolliert konstant oder gradiert hergestellt werden können. Da es sich bei dem Plasma-Sprühverfahren um einen sehr schnellen Prozess handelt, ist das zugeführte Beschichtungsmaterial nur sehr kurz mit dem heißen Plasma in Wechselwirkung, um aufgeschmolzen und auf die zu beschichtende Oberfläche aufgetragen zu werden. Hierdurch können Materialveränderungen weitgehend unterdrückt oder in tolerablen Grenzen gehalten werden.

Gemäß einer weiteren vorteilhaften Ausführungsform der erfindungsgemäßen Lösung ist die Beschichtung eine metallische und/oder keramische Beschichtung. Keramische Schichten auf Konstruktionsteilen aus Stahl haben hervorragende Eigenschaften. Sie sind verschleißfest, reibungsarm sowie elektrisch und thermisch isolierend. Bei langen Maschinenlaufzeiten tragen sie zu einer Kostensenkung bei und sichern die Produktqualität durch eine langzeitstabile Oberfläche.

Bei einer bevorzugten Ausführungsform erstellt der optische Scanner ein digitales Oberflächenprofil. Ein derartiges digitales Oberflächenprofil kann über geeignete Software weiterverarbeitet werden und beispielsweise zur Offline-Programmierung der Beschichtungsvorrichtung verwendet werden. Gleichzeitig ermöglicht das digitale Oberflächenprofil eine Einbindung in andere digitale Steuervorgänge, ohne dass zuvor manuell ermittelte Messergebnisse in eine digitale Form umgewandelt werden müssen. Das digitale Oberflächenprofil beschleunigt somit die Datenermittlung und vereinfacht die Datenübertragung bzw. -weiterverarbeitung.

Bei einer weiteren bevorzugten Ausführungsform weist die Messeinrichtung zur Ermittlung der Bauteilkoordinaten einen mechanischen Taster auf. Derartige mechanische Taster sind im Vergleich zu einem optischen Scanner deutlich kostengünstiger und insbesondere zur Ermittlung von Stichprobenergebnissen mit geringer Stichprobenanzahl gut geeignet. Darüber hinaus ist ein derartiger mechanischer Taster robust und flexibel einsetzbar. Insbesondere für Kleinserien mit geringen Stückzahlen und/oder geringeren Qualitätsanforderungen, welche lediglich eine temporäre Überprüfung der Qualität erfordern, ist der mechanische Taster eine preiswerte Alternative zur optischen Scannereinrichtung.

## Patentansprüche

1. Messverfahren zum Messen einer Dicke einer Beschichtung eines Bauteils, insbesondere einer hitzeverträglichen Beschichtung auf einer Komponente einer Gasturbine,
- wobei mit einer Messeinrichtung, insbesondere einem optischen Scanner, Koordinaten des Bauteils vor und nach der Beschichtung dreidimensional vermessen werden,
- wobei ein thermischer Verzug des Bauteils während der Beschichtung erfasst wird,
- wobei die Dicke der Beschichtung aus einem Vergleich der gemessenen Bauteilkoordinaten vor und nach der Beschichtung ermittelt wird,
- wobei der thermische Verzug des Bauteils durch einen Vergleich mit wenigstens einem Referenzpunkt an einer unbeschichteten Stelle bei der Dickenermittlung der Beschichtung berücksichtigt wird,
**dadurch gekennzeichnet,**
- **dass** das Verfahren zur Ermittlung einer Massen-Intensitäts-Verteilung einer Beschichtungsvorrichtung verwendet wird und hierbei ein plattenförmiges Bauteil ohne Relativbewegung zur Beschichtungsvorrichtung eine vorher definierte Zeit beschichtet wird.

2. Messverfahren nach Anspruch 1,
**dadurch gekennzeichnet,**
**dass** der thermische Verzug des plattenförmigen Bauteils durch Vermessen einer unbeschichteten Rückseite des Bauteils kompensiert wird.

3. Messverfahren nach Anspruch 1 oder 2,
**dadurch gekennzeichnet,**
**dass** die Massen-Intensitäts-Verteilung aus der Dickenverteilung ermittelt wird

4. Messverfahren nach einem der Ansprüche 1 bis 3,
**dadurch gekennzeichnet,**
**dass** die gewonnene Massen-Intensitäts-Verteilung der Beschichtungsvorrichtung als Input für eine Offline-Programmierung verwendet wird.

5. Messverfahren nach einem der Ansprüche 1 bis 4,
**dadurch gekennzeichnet,**
**dass** die Beschichtung im Plasma-Bogen-Sprühverfahren aufgebracht wird.

6. Messverfahren nach einem der Ansprüche 1 bis 5,
**dadurch gekennzeichnet,**
**dass** die Beschichtung eine metallische und/oder keramische Beschichtung ist.

7. Messverfahren nach einem der Ansprüche 1 bis 6,
**dadurch gekennzeichnet,**
**dass** der optische Scanner ein digitales Oberflächenprofil erstellt.

8. Messverfahren nach einem der Ansprüche 1 bis 7,
**dadurch gekennzeichnet,**
**dass** die Messeinrichtung zur Ermittlung der Bauteilkoordinaten einen mechanischen Taster aufweist.

## Claims

1. Measuring method for measuring a thickness of a coating of a component, in particular a heat-tolerant coating of a component of a gas turbine,
- wherein a measuring device, in particular an optical scanner, measures coordinates of the component in three dimensions before and after coating,
- wherein a thermal distortion of the component is detected during coating,
- wherein the thickness of the coating is determined from a comparison of the measured component coordinates before and after coating,
- wherein the thermal distortion of the component is taken into account when determining the thickness of the coating by comparison with at least one reference point at an uncoated location,
**characterised in that**
the method for determining a mass intensity distribution of a coating apparatus is used, and for this a plate-like component is coated at a predefined time without movement relative to the coating apparatus.

2. Measuring method according to claim 1, **characterised in that** the thermal distortion of the plate-like component is compensated by measuring an uncoated rear side of the component.

3. Measuring method according to claim 1 or 2, **characterised in that** the mass intensity distribution is determined from the thickness distribution.

4. Measuring method according to any of claims 1 to 3, **characterised in that** the resulting mass intensity distribution of the coating apparatus is used as an input for off-line programming.

5. Measuring method according to any of claims 1 to 4, **characterised in that** the coating is applied in the plasma arc spray process.

6. Measuring method according to any of claims 1 to 5, **characterised in that** the coating is a metallic and/or ceramic coating.

7. Measuring method according to any of claims 1 to 6, **characterised in that** the optical scanner produces a digital surface profile.

8. Measuring method according to any of claims 1 to 7, **characterised in that** the measuring device for determining the component coordinates comprises a mechanical probe.

## Revendications

1. Procédé de mesure pour la mesure d'une épaisseur d'un revêtement d'une pièce, plus particulièrement d'un revêtement résistant à la chaleur sur un composant d'une turbine à gaz,
- dans lequel, avec un dispositif de mesure, plus particulièrement un scanner optique, les coordonnées de la pièce avant et après le revêtement sont mesurées de manière tridimensionnelle,
- dans lequel une défaillance thermique de la pièce pendant le revêtement est détectée,
- dans lequel l'épaisseur du revêtement est déterminée à partir d'une comparaison des coordonnées mesurées de la pièce avant et après le revêtement,
- dans lequel la défaillance thermique de la pièce est prise en compte par une comparaison avec au moins un point de référence au niveau d'un endroit non revêtu lors de la détermination de l'épaisseur du revêtement,
**caractérisé en ce que**
- le procédé de détermination d'une répartition masses-intensités d'un dispositif de revêtement est utilisé et une pièce en forme de plaque est revêtue sans mouvement relatif par rapport au dispositif de revêtement pendant un temps prédéfini.

2. Procédé de mesure selon la revendication 1,
**caractérisé en ce que**
la défaillance thermique de la pièce en forme de plaque est compensée par une mesure du côté arrière non revêtu de la pièce.

3. Procédé de mesure selon la revendication 1 ou 2,
**caractérisé en ce que**
la répartition masses-intensités est déterminée à partir de la répartition de l'épaisseur.

4. Procédé de mesure selon l'une des revendications 1 à 3,
**caractérisé en ce que**
la répartition masses-intensités obtenue du dispositif de revêtement est utilisée comme entrée pour une programmation hors ligne.

5. Procédé de mesure selon l'une des revendications 1 à 4,
**caractérisé en ce que**
le revêtement est appliqué à l'aide d'un procédé de pulvérisation à arc à plasma.

6. Procédé de mesure selon l'une des revendications 1 à 5,
**caractérisé en ce que**
le revêtement est un revêtement métallique et/ou céramique.

7. Procédé de mesure selon l'une des revendications 1 à 6,
**caractérisé en ce que**
le scanner optique crée un profil de surface numérique.

8. Procédé de mesure selon l'une des revendications 1 à 7,
**caractérisé en ce que**
le dispositif de mesure pour la détermination des coordonnées de la pièce comprend un palpeur mécanique.
